**Europäisches Patentamt**

**European Patent Office**

**Office européen des brevets**

(11) Veröffentlichungsnummer: **0 224 266**

**A1**

## (12) EUROPÄISCHE PATENTANMELDUNG

(21) Anmeldenummer: **86116502.5**

(51) Int. Cl.⁴: **B65G 17/36**

(22) Anmeldetag: **27.11.86**

(30) Priorität: **27.11.85 DE 3541879**

(43) Veröffentlichungstag der Anmeldung:
**03.06.87 Patentblatt 87/23**

(84) Benannte Vertragsstaaten:
**AT BE CH DE ES FR GB GR IT LI LU NL SE**

(71) Anmelder: **Mafö-Maschinen- und Fördertechnik GmbH**
**Auf dem Tigge 5**
**D-4720 Beckum(DE)**

(72) Erfinder: **Koster, Karl, Prof. Dr.-Ing.**
**Mathilde-Kaiser-Strasse 23**
**D-4300 Essen 1(DE)**

(74) Vertreter: **Zenz, Joachim Klaus, Dipl.-Ing. et al**
**ZENZ & HELBER Patentanwälte Am**
**Ruhrstein 1**
**D-4300 Essen 1(DE)**

(54) **Becher für Becherwerke mit Fliehkraftentleerung.**

(57) Becher für im Hochleistungsbereich betriebene Becherwerke mit Fliehkraftentleerung. Zur Erzielung eines möglichst frühen Schüttgutabwurfes und eines besonders guten Restentleerungsverhaltens wird ein Becher mit einer zur Abwurfkante (4) hin nach außen gekrümmten Innenfläche (4') der Becheraußenwand (1) verwendet. Der Becheröffnungswinkel $\epsilon$ nimmt im Bereich der Abwurfkante (4) seinen größten Wert $\epsilon_{1.2}$ ein.

Fig. 1

EP 0 224 266 A1

## Becher für Becherwerke mit Fliehkraftentleerung

Die Erfindung betrifft Becher für Becherwerke mit Fliehkraftentleerung.

Derartige, allgemein auch als Elevator-Becher bekannte Becher weisen zumindest eine Becherinnenwand, eine Becheraußenwand, einen die Becheraußen-und -innenwand verbindenden Boden sowie entsprechende Seitenwände auf. Für derartige Elevator-Becher gibt es eine deutsche Industrienorm (DIN 15 231 bis 15 245 und DIN 22 201 bis 22 213). Diese genormten Becher weisen eine im Vertikalschnitt gerade Becheraußenwand auf, deren Öffnungsende von einer in der Regel geraden und horizontal angeordneten Abwurfkante - gelegentlich auch als Abwurfpunkt bezeichnet -gebildet wird. Derartige Becher sind im Hochleistungsbereich, d.h. im Bereich relativ großer Fördergeschwindigkeiten, z.B. von mehr als 2 m/s weitgehend ungeeignet. In diesem Hochleistungsbereich ist die sogenannte "Hauptentleerungsphase" für den freien Schüttgutabwurf relativ kurz.

Zur Vermeidung dieses Nachteiles wurde vorgeschlagen, die Becheraußenwand zur Abwurfkante hin nach innen gekrümmt zu gestalten, wobei diese Krümmung unter Berücksichtigung der spezifischen Schüttguteigenschaften die Form eines Teiles einer logarithmischen Spirale aufweisen sollten (siehe z.B. DE-Zeitschrift BRAUNKOHLE 36 (1984), Heft 6/7, Seiten 180-187 sowie "TASCHENBUCH DER MATHEMATIK" von I.N. Bronstein und K.S. Semendjajew, 1968). Weder die nach DIN gerade verlaufenden noch die nach innen entlang einer logarithmischen Spirale oder sonstigen nach innen gekrümmten Becheraußenwände, wie sie auch in der DE-OS 33 22 879 beschrieben werden, führen im Hochleistungsbereich, also insbesondere bei Fördergeschwindigkeiten von 2 m/s und mehr, zu befriedigenden Ergebnissen hinsichtlich des Entleerungsverhaltens.

Davon ausgehend liegt der Erfindung die Aufgabe zugrunde, das Entleerungsverhalten der Becher von Becherwerken mit Fliehkraftentleerung, insbesondere bei extrem schnell laufenden Becherwerken zu verbessern.

Erfindungsgemäß wird diese Aufgabe dadurch gelöst, daß die Innenfläche der Becheraußenwand zur Abwurfkante hin nach außen derart gekrümmt ist, daß der Becheröffnungswinkel ϵ im Bereich der Abwurfkante am größten ist. Bei einer praktischen Ausführungsform der Erfindung ist die Innenfläche der Becheraußenwand S-förmig gekrümmt, so daß insgesamt ein tulpenförmiges Seitenprofil entsteht.

Besonders gute Ergebnisse werden erzielt, wenn die Becheraußenwand in ihrem der Abwurfkante nahen, nach außen hin (also konvex) gekrümmten Bereich die Form eines Abschnitts einer logarithmischen Spirale aufweist. Auch für den der Abwurfkante fernen Bereich der Innenfläche der Becheraußenwand wird vorzugsweise die Form eines Abschnitts einer logarithmischen Spirale verwendet, wie sie bereits im Zusammenhang mit der oben erwähnten DE-Zeitschrift BRAUNKOHLE beschrieben wurde; in diesem Bereich verläuft die Krümmung nach innen hin, so daß eine konkave Innenfläche entsteht.

Durch die Erfindung wird u.a. der Vorteil erreicht, daß der Schüttgutabwurf außerordentlich früh beginnt und auch ein sehr gutes Restentleerungsverhalten erzielt wird, wobei bereits in der Hauptentleerungsphase eine fast vollständige Schüttgutentleerung erfolgt. Derartige Becher eignen sich für Schüttgüter aller Art, und zwar auch bei sehr hohen Fördergeschwindigkeiten von z.B. 2,5 m/s. Im Vergleich zu den bekannten Bechern mit nach innen gekrümmter Becheraußenwand, bei denen die Innenfläche die Form eines Abschnitts einer logarithmischen Spirale aufweist, können Förderkapazitätssteigerungen von 20 % und mehr erwartet werden.

In der Vergangenheit hatten theoretische Überlegungen, unterstützt durch experimentelle Ergebnisse dazu geführt, daß gerade den entlang einer logarithmischen Spirale gekrümmten Innenflächen der Becheraußenwände der Vorzug gegenüber allen anderen Innenflächenkonturen zu geben sei. Umso überraschender war die Erkenntnis, daß die zur Abwurfkante hin nach außen gekrümmten Innenflächen der Becheraußenwände zu besseren Ergebnissen hinsichtlich des Entleerungsverhaltens führen. Während die bisherige Entwicklung weg von konstanten Becheröffnungswinkeln gemäß der DIN-Vorschriften und hin (zur Abwurfkante hin) zu kleiner werdenden Becheröffnungswinkeln führte, wird nunmehr zur Erzielung noch besserer Ergebnisse genau das Gegenteil getan, nämlich der Becheröffnungswinkel zur Abwurfkante hin stetig vergrößert, so daß der größte Becheröffnungswinkel sich im Bereich der Abwurfkante selbst befindet. Die Schüttgutstaus, die auch bei den entlang einer logarithmischen Spirale nach innen hin gekrümmten Innenflächen der Becheraußenwände bei sehr hohen Fördergeschwindigkeiten beobachtet wurden, treten bei den erfindungsgemäßen Bechern nicht mehr auf.

Der Abwurfbereich der Becher kann durch die neue Innenflächenkontur noch besser definiert werden, wodurch noch sinnvollere Konstruktionen des Becherwerkskopfes einschließlich der Abwurfstation ermöglicht werden.

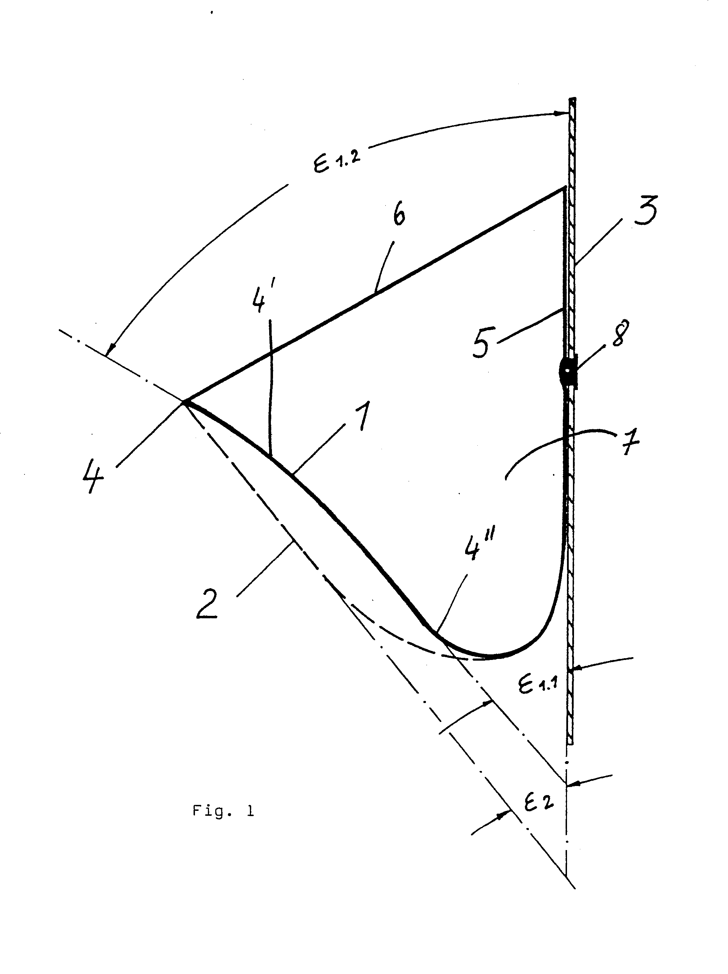

Ein bevorzugtes Ausführungsbeispiel eines erfindungsgemäßen Bechers wird im folgenden anhand der beiliegenden Zeichnung beschrieben. Die einzige Figur zeigt einen Schnitt durch einen - schematisch dargestellten Becher für den Hochleistungsbereich.

Der Vertikalschnitt durch den Becher ist als durchgezogene Linie dargestellt, wobei 1 die Becheraußenwand, 5 die Becherinnenwand und 6 die freie Kante der Seitenwand 7 an der Mündungsöffnung des Bechers darstellen. Das an sich bekannte Zugorgan 3 ist ein Gurtband oder eine Kette, an der der Becher mit bekannten Befestigungsmitteln 8 gelenkig befestigt ist.

In der Figur ist gestrichelt der Krümmungsverlauf 2 einer nach DIN geformten Becheraußenwand dargestellt, deren Kontur zur Abwurfkante 4 hin völlig gerade ist, d.h., daß in diesem Bereich der Öffnungswinkel $\epsilon_2$ konstant ist.

Demgegenüber vergrößert sich der Öffnungswinkel des erfindungsgemäßen Bechers nach außen hin zunehmend, er nimmt seinen kleinsten Wert $\epsilon_{1.1}$ im Übergangsbereich zwischen dem konkav gekrümmten Bereich 4" und dem konvex gekrümmten Bereich 4' der Innenfläche der Becheraußenwand 1 ein. Der größte Becheröffnungswinkel $\epsilon_{1.2}$ wird im Bereich der Abwurfkante 4 an der Mündungsöffnung des Bechers erreicht. Der Becheröffnungswinkel wird dabei jeweils durch den Schnittwinkel zwischen der Tangente durch die einzelnen Punkte der Innenfläche der Becheraußenwand 1 und der Becherinnenwand 5 bestimmt.

## Ansprüche

1. Becher für Becherwerke mit Fliehkraftentleerung, **dadurch gekennzeichnet**, daß die Innenfläche der Becheraußenwand (1) zur Abwurfkante (4) hin nach außen derart gekrümmt ist, daß der Becheröffnungswinkel $\epsilon$ im Bereich der Abwurfkante (4) am größten ist.

2. Becher nach Anspruch 1, dadurch gekennzeichnet, daß die Innenfläche der Becheraußenwand (1) S-förmig gekrümmt ist.

3. Becher nach Anspruch 1 oder 2, dadurch gekennzeichnet, daß die Becherauswand (1) in ihrem der Abwurfkante (4) nahen Bereich (4') in Form eines Abschnitts einer logarithmischen Spirale nach außen hin gekrümmt ist.

4. Becher nach einem der Ansprüche 1 bis 3, dadurch gekennzeichnet, daß die Becheraußenwand (1) in ihrem der Abwurfkante (4) fernen Bereich (4") in Form eines Abschnitts einer logarithmischen Spirale nach innen hin gekrümmt ist.

Fig. 1

## EINSCHLÄGIGE DOKUMENTE

EP 86116502.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| D,Y | DE - A1 - 3 322 879 (AUMUND)<br>* Fig. 1,3; Zusammenfassung * | 1,3,4 | B 65 G 17/36 |
| Y | GB - A - 720 533 (OATES KAY)<br>* Fig. 7; Seite 2, Zeilen 16-19* | 1,3,4 | |
| D,A | BRAUNKOHLE TAGEBAUTECHNIK, Heft 6/ 7 von 1984<br>KARL H. KOSTER "Grundsätzliches zur Becherwerkstechnik sowie neueste Erkenntnisse zum Schüttgutabwurf bei Fliehkraftentleerung" Seiten 180-187<br>* Seite 186 * | 1,3,4 | |
| A | US - A - 2 778 484 (FOSTER)<br>* Fig. 2 * | 1 | RECHERCHIERTE SACHGEBIETE (Int. Cl. 4)<br><br>B 65 G |
| A | DE - A1 - 2 753 930 (TRIPOTEAU)<br>* Fig. 1 *<br>---- | 2 | |

Der vorliegende Recherchenbericht wurde für alle Patentansprüche erstellt.

| Recherchenort | Abschlußdatum der Recherche | Prüfer |
|---|---|---|
| WIEN | 10-02-1987 | BAUMGARTNER |